# EUROPÄISCHE PATENTSCHRIFT

(11) **EP 4 162 553 B1**
(45) Veröffentlichungstag und Bekanntmachung des Hinweises auf die Patenterteilung: **06.08.2025**
(21) Anmeldenummer: 21728514.7
(22) Anmeldetag: 21.05.2021
(51) Int. Cl.: H01M 8/04089, H01M 8/04082, H01M 8/04223, H01M 8/04302, H01M 8/04303, H01M 8/0438, H01M 8/04746

(54) **VERFAHREN ZUM BETREIBEN EINES UNTERSEEBOOTES MIT EINER BRENNSTOFFZELLE UND EINEM WASSERSTOFFSPEICHER**
METHOD FOR OPERATING A SUBMARINE WITH A FUEL CELL AND A HYDROGEN STORE
PROCÉDÉ DE FONCTIONNEMENT D'UN SOUS-MARIN AVEC UNE PILE À COMBUSTIBLE ET UN ACCUMULATEUR D'HYDROGÈNE

(30) Priorität: 08.06.2020 DE 102020207137
(43) Veröffentlichungstag der Anmeldung: 12.04.2023
(73) Patentinhaber: thyssenkrupp Marine Systems GmbH, 24143 Kiel (DE); thyssenkrupp AG, 45143 Essen (DE)
(72) Erfinder: KRUMMRICH, Stefan, 24634 Padenstedt (DE)
(74) Vertreter: thyssenkrupp Intellectual Property GmbH
(86) Internationale Anmeldenummer: PCT/EP2021/063667
(87) Internationale Veröffentlichungsnummer: WO 2021/249750

(56) Entgegenhaltungen:
- EP-A2- 2 521 210
- WO-A1-00/63993
- DE-A1- 102009 036 435
- US-A1- 2005 031 918
- US-A1- 2015 204 486

## Beschreibung

Die Erfindung betrifft ein Verfahren zur Steigerung der getauchten Reichweite eines Unterseebootes, welches mit einer Brennstoffzelle und einem Wasserstoffspeicher arbeitet.

Die Verwendung von Brennstoffzellen in einem Unterseeboot unterscheidet sich von praktisch jeder anderen Verwendung von Brennstoffzellen. Da die Brennstoffzelle zur Energieerzeugung im getauchten Zustand verwendet wird, gibt es keine Luft, aus der Sauerstoff entnommen werden kann, keine Umgebungsluft, an die Restgase einfach abgegeben werden können, der Umgebungsdruck in einem Unterseeboot schwankt und die Reichweite ist wichtig, also die Strecke, die das Unterseeboot getaucht mit einer Tankfüllung fahren kann.

Aus der EP 2 840 636 A1 ist eine Brennstoffzelle mit Zirkulationsbetrieb bekannt, bei welcher eine Inertgasentsorgung erfolgt.

Aus der WO 2010/056829 A2 ist ein Verfahren zur Abtrennung von Komponenten aus einem Gasstrom bekannt.

Aus der EP 2 687 282 A1 ist ein Verfahren zum Abscheiden von Wasserstoff aus einem wasserstoffhaltigen Gasgemisch in einer Membran mit hohem Spülgasdruck bekannt.

Aus der US 2007/0065711 A1 ist ein Brennstoffzellenmodul mit einem Wasserabscheider bekannt.

Aus der DE 696 02 805 T2 ist eine Brennstoffzelle mit einer Gas-Flüssigkeit-Gemischeinheit und einer Gas-Flüssigkeit-Trennvorrichtung bekannt.

Aus der DE 43 18 818 C2 ist eine Vorrichtung zur Bereitstellung von Prozeßluft für den Betrieb luftatmender Brennstoffzellensysteme bekannt.

Aus der DE 603 13 309 T2 ist ein Brennstoffzellensystem mit einem Luftbefeuchter und einem Gas-Flüssigkeits-Abscheider bekannt.

Aus der AT 501 963 A1 ist ein Brennstoffzellensystem mit einer Rezirkulationseinrichtung bekannt.

Aus der WO 2005/064730 A2 ist eine Brennstoffzelle mit einem Rezirkulationskreis bekannt.

Aus der JP 2000-58092 A ist ein Brennstoffzellensystem mit einer Wassereinspritzung und Befeuchtern bekannt.

Aus der CN 102 569 851 A1 ist eine Schnellkupplungsvorrichtung bekannt.

Aus der US 2004/0043724 A1 ist ein Brennstoffzellensystem mit Modulen bekannt.

Aus der US 2013/0280635 A1 ist ein modulares Brennstoffzellensystem bekannt.

Aus der US 4,976,162 ist eine Brennstoffzelle mit Mitteln zur Entfernung von Produktwasser bekannt.

Aus der US 2012/0135326 A1 ist eine Brennstoffzelle mit einem Verteilerrohr bekannt.

Aus der DE 10 2004 004624 B3 ist eine U-Boot-Brennstoffzelleneinrichtung in modularem Aufbau bekannt.

Aus der DE 10 2014 219164 A1 ist ein Brennstoffzellenstapel bekannt.

Aus der DE 198 22 697 C1 ist ein Brennstoffzellensystem mit Anschlüssen für eine Gasquelle sowie elektrischen Anschlüssen bekannt.

Aus der DE 10 2007 051311 A1 ist ein Kraftstofftank mit mindestens einer Schnittstelle für ein Brennstoffzellenmodul bekannt, wobei die Schnittstelle eine lösbare Kopplung ermöglicht.

Aus der DE 102011 100 534 A1 ist ein Verfahren zum Betreiben einer Reformer-Brennstoffzellenanlage bekannt.

Aus der EP 2 521 210 A2 ist ein Verfahren zum Betreiben einer Reformer-Brennstoffzellenanlage bekannt.

Aus der DE 10 2099 036 435 A1 ist eine Versorgungsanordnung für ein Brennstoffzellenpack, ein Brennstoffzellenmodul sowie ein Verfahren zum Betreiben des Brennstoffzellenmoduls bekannt.

Aus der US 2015 / 0204486 A1 ist der Betrieb eines Gassystems für ein Unterwasserfahrzeug bekannt.

WO 00 / 63993 A1 in eine netzunabhängige, schadstoffemissionsfrei portable Stromversorgungseinrichtung sowie ein Verfahren zur Erzeugung von Strom mittels dieser bekannt.

Aus der US 2005 / 0031918 A1 ist ein hypergolisches Wasserstoffgeneratorsystem für Brennstoffzellenkraftwerke bekannt.

Aufgabe der Erfindung ist es, die Reichweite mit einer vorgegebenen Menge an Wasserstoff für ein Unterseeboot mit Brennstoffzelle zu maximieren.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient dem Betreiben eines Unterseebootes mit einer Brennstoffzelle und einem Wasserstoffspeicher sowie einem Druckregler zwischen dem Wasserstoffspeicher und der Brennstoffzelle. Das Verfahren weist die folgenden Schritte auf:
- Vorgeben eines ersten Druckes für die Anodenseite der Brennstoffzelle, wobei der erste Druck als Idealwert für den Regelbetrieb ausgelegt ist,
- Vorgeben eines zweiten Druckes für die Anodenseite der Brennstoffzelle, wobei der zweite Druck der Minimaldruck ist,
- Erfassen eines Speicherdrucks, mit welchem Wasserstoff vom Wasserstoffspeicher an den Druckregler gegeben wird,
- Auswählen eines Arbeitsdrucks in Abhängigkeit vom Speicherdruck, welcher auf die Anodenseite der Brennstoffzelle gegeben wird und durch den Druckregler eingestellt wird.

Der Arbeitsdruck wird in Abhängigkeit vom Speicherdruck sowie dem ersten Druck und dem zweiten Druck gewählt.

Der Idealwert ist ein Vorgabewert, welcher für einen optimalen stationären Betrieb ohne äußere Restriktionen eingestellt werden soll. Dieser Idealwert ergibt sich beispielsweise aus der Optimierung hinsichtlich Haltbarkeit, erzeugter Menge elektrischer Energie und Wirkungsgrad. Ziel wäre somit der Betrieb der Brennstoffzelle bei einem dem Idealwert entsprechendem Druck während des Regelbetriebes.

Der Minimaldruck ist der Druck, bei dessen Unterschreiten die Brennstoffzelle abgeschaltet wird. Reicht der aus dem Wasserstoffspeicher zur Verfügung gestellte Druck nicht aus, um den Minimaldruck in der Brennstoffzelle zu erreichen, so wird die Brennstoffzelle abgeschaltet. In diesem Fall muss das Unterseeboot zunächst wieder mit Wasserstoff betankt werden, bevor die Brennstoffzelle wieder in Betrieb genommen werden kann.

Ziel ist es, verschiedene widerstreitende Optimierungen zusammen zu bringen. Zum einen ist es wünschenswert, mit einem hohen Druck zu arbeiten, da insbesondere bei hohem Partialdruck auf der Anodenseite und der Kathodenseite der Wirkungsgrad der Brennstoffzelle hoch ist, zum anderen durch die geringe bis keine Druckdifferenz die mechanische Belastung für die Membran reduziert wird. Des Weiteren ist es wünschenswert, die Brennstoffzelle auch mit sehr geringem Druck zu betreiben, da dann eine möglichst weitreichende Entleerung des Wasserstoffvorrates möglich ist und somit mehr Wasserstoff zur Energieerzeugung zur Verfügung steht und so die Reichweite gesteigert wird. Als weiteres ist zu berücksichtigen, dass konstante Bedingungen für den Betrieb der Brennstoffzelle, auch für die Lebensdauer, bevorzugt sind.

Daher hat sich gezeigt, dass die Auswahl des ersten Drucks und des zweiten Drucks sowie die Regelung des Arbeitsdrucks in Abhängigkeit vom Speicherdruck zwischen dem ersten Druck und dem zweiten Druck zu einer maximalen Reichweite eines Unterseebootes führt. Dabei wird im Regelbetrieb der Arbeitsdruck, beispielsweise durch den Druckregler oder eine den Druckregler steuernde Regelungseinrichtung, so lang in der Höhe des ersten Drucks gehalten, so lange der Speicherdruck hoch genug ist, um den Arbeitsdruck in der Höhe des ersten Druckes zu halten. Aufgrund des Druckverlustes, welcher sich in einem Druckregler ergibt, muss der Speicherdruck entsprechend höher als der erste Druck sein. Wenn der Speicher so weit entleert ist, dass der Speicherdruck unter den ersten Druck absinkt, aber noch oberhalb des zweiten Drucks liegt, wird der Arbeitsdruck in einen Bereich zwischen dem ersten Druck und dem zweiten Druck abgesenkt. Die Absenkung kann dabei beispielsweise kontinuierlich erfolgen und beispielsweise dem Absinken des Speicherdrucks folgen. Die Absenkung des Arbeitsdrucks kann alternativ auch stufenweise erfolgen oder, in einer weiteren Alternative, in einem Schritt auf einen Druck knapp oberhalb des zweiten Drucks erfolgen. Wesentlich ist, dass hierdurch die Brennstoffzelle so lange wie möglich mit einem optimalen Druck betrieben wird und anschließend durch ein Weiterarbeiten bei geringerem Druck eine möglichst weitgehende Leerung des Wasserstoffspeichers zu ermöglichen und somit durch die Kombination dieser beiden Betriebsbereiche die maximale Reichweite zu erzielen.

Wesentlich ist, dass der Druck, welchen ein Wasserstoffspeicher liefert, üblicherweise vom Füllstand abhängt. Für Druckspeicher ist der Zusammenhang fast linear, bei Metallhydridspeichern ist aber auch eine andere Abhängigkeit feststellbar. Dieses unterscheidet einen Wasserstoffspeicher von einem Wasserstofferzeuger, beispielsweise einem Reformer, dieser stellt praktisch unabhängig von Füllstand des Vorrats an Edukt zur Erzeugung des Wasserstoffs einen mehr oder weniger konstanten Druck zur Verfügung, weist jedoch betriebsbedingt zumindest einen vorgegebenen Mindestdruck für den Betrieb auf. Dieses gilt auch, wenn dem Reformer beispielsweise ein Zwischenspeicher nachgeschaltet ist. Ein solcher Zwischenspeicher ist von einem erfindungsgemäßen Wasserstoffspeicher zu unterscheiden.

Um die Reichweite zu optimieren und auch um die akustische Signatur so gering wie möglich zu halten, wird auf einen Kompressor verzichtet. Somit kann der Arbeitsdruck nicht höher sein als der Speicherdruck. Mit einem Kompressor wäre der Arbeitsdruck natürlich vollständig unabhängig vom Speicherdruck wählbar. Der Speicher wird während der Fahrt des Unterseeboots auch nicht von einem Reformer oder anderem Wasserstofferzeuger gefüllt, sodass der Speicherdruck über die Betriebszeit sinkt. Der Speicher wird durch Betankung von außen wieder gefüllt.

Erfindungsgemäß wird zwischen dem Wasserstoffspeicher und der Brennstoffzelle der Druck nicht erhöht. Es wird somit kein Kompressor oder eine vergleichbare Vorrichtung verwendet, um Geräuschemissionen zu vermeiden.

Erfindungsgemäß wird der Wasserstoff ausschließlich aus dem Wasserstoffspeicher entnommen und nicht durch einen Reformer erzeugt. Gerade bei kleinen Unterseebooten ist es vorteilhaft auf einem im Inneren des Druckkörpers angeordneten Reformer zu verzichten und den Wasserstoff ausschließlich in Speichern außerhalb des Druckkörpers zu speichern. Dieses können insbesondere Metallhydridspeicher, Druckluftspeicher oder Speicher für flüssigen Wasserstoff sein. Metallhydridspeicher haben sich als besonders geeignet herausgestellt. Ein Reformer unterscheidet sich bezogen auf den bereitgestellten Wasserstoffdruck grundlegend von einem Wasserstoffspeicher. Solange das Ausgangsmaterial für den Reformer, beispielsweise Methanol, zur Verfügung steht, stellt der Reformer den Wasserstoff mit praktisch konstantem Druck zur Verfügung. Somit entfällt eine Druckabhängigkeit als Funktion der Restmenge an zur Verfügung stehendem Wasserstoff.

Ein Wasserstoffspeicher im Sinne der Erfindung ist somit ausschließlich durch einen Betankungsvorgang auffüllbar.

In einer weiteren Ausführungsform ist der Wasserstoffspeicher ein Metallhydridspeicher.

In einer weiteren Ausführungsform der Erfindung wird der Arbeitsdruck in der Höhe des ersten Druckes oder wenn dieses nicht möglich ist so nahe am ersten Druck gewählt, wie dieses aufgrund des Speicherdruckes möglich ist.

In einer weiteren Ausführungsform der Erfindung wird zwischen dem Speicherdruck und dem Arbeitsdruck eine Differenz von wenigstens 5 kPa, bevorzugt von wenigstens 10 kPa, besonders bevorzugt von wenigstens 20 kPa gehalten. Diese Druckdifferenz sorgt dafür, dass der etwas niedriger liegende Arbeitsdruck gut eingestellt und gehalten werden kann. Druckschwankungen des Speichers wirken sich damit nicht unmittelbar auf die Brennstoffzelle aus.

Als Wert für den Speicherdruck kann der anliegende Druck am Eingang des Druckreglers verwendet werden. Da die Größen durch den Druckverlust über die Zuleitung proportional gekoppelt sind, ist der anliegende Druck am Eingang des Druckreglers ein Maß für den Speicherdruck.

In einer weiteren Ausführungsform der Erfindung wird der erste Druck zwischen 250 kPa und 400 kPa gewählt. Dieser Druckbereich hat sich für den Betrieb an Bord eines Unterseebootes als ideal herausgestellt.

In einer weiteren Ausführungsform der Erfindung wird der zweite Druck zwischen 200 kPa und 50 kPa, bevorzugt zwischen 170 kPa und 120 kPa gewählt. Diese Grenze hat sich als Optimum zwischen Maximierung der Reichweite und Energieausbeute (aufgrund zu geringer Stoffumsätze bei zu geringem Druck) erwiesen.

In einer weiteren Ausführungsform der Erfindung wird im Verfahrensschritt Auswählen eines Arbeitsdrucks als weitere Information ein Betriebszustand berücksichtigt, wobei der Betriebszustand ausgewählt ist aus der Liste umfassend Spülen, Hochfahren, Regelbetrieb und Abschalten.

Der Betriebszustand Spülen kann auf das Austragen von Inertgas und/oder Wasser ausgerichtet sein. Hierzu wird kurzfristig der Druck im Inneren der Brennstoffzelle angehoben und kurzfristig ein geeignetes Ventil geöffnet. Der Druck kann dabei auf einen Wert oberhalb des ersten Drucks angehoben werden. Die Brennstoffzelle kehrt anschließend zum normalen Druckbereich zurück. Dieses kann entweder dadurch passieren, dass Wasserstoff und Sauerstoff umgesetzt werden und der Druck dadurch sinkt, oder dadurch, dass das Ventil solange geöffnet ist, bis der Druck gesunken ist. Anschließend kann in den Betriebszustand Regelbetrieb übergegangen werden. Kurzfristig bedeutet in diesem Zusammenhang so kurz wie möglich. Der erhöhte Druck sollte die Brennstoffzelle und vor allem die Membran möglichst wenig belasten. Der Zeitraum hierfür ist somit insbesondere durch Regelung- und Steuerungsparameter vorgegeben und sollte so kurz wie möglich gehalten werden.

Hochfahren und Abschalten sind in einem Unterseeboot häufiger, da üblicherweise mehrere Stacks mit jeweils einer Mehrzahl an Brennstoffzellen betrieben werden. Die Anzahl der in Betrieb befindlichen Stacks kann sich nach dem Energiebedarf des Unterseebootes richten und unterliegt in diesem Falle großen Schwankungen. Daher werden dann regelmäßig einzelne Stacks in Betrieb genommen, also hochgefahren, wenn der Energiebedarf steigt, oder außer Betrieb genommen, also abgeschaltet, wenn der Energiebedarf sinkt.

In einer weiteren Ausführungsform der Erfindung wird beim Betriebszustand Hochfahren der Arbeitsdruck zunächst unterhalb des zweiten Druckes gewählt und anschließend wird der Arbeitsdruck gesteigert, bis der für den Regelbetrieb gewählte Arbeitsdruck erreicht ist. Besonders bevorzugt wird dabei der Arbeitsdruck kurzfristig oberhalb des ersten Druckes gewählt, wodurch eine kurzfristige gesteigerte Umsetzung und damit Aufheizung erfolgt, sodass die Brennstoffzelle schneller in den stationären Zustand kommt. Dadurch, dass der Arbeitsdruck zunächst unter dem zweiten Druck gewählt wird, ist ein Hochfahren immer in gleicher Weise unabhängig vom Füllstand des Wasserstoffspeichers und damit des Speicherdrucks möglich. Zunächst bedeutet in diesem Zusammenhang, dass dieser Vorgang mit den entsprechenden Parametern, insbesondere Druck, begonnen wird, die Parameter, insbesondere der Druck, dann aber im Verlaufe des Vorgangs, also anschließend, verändert wird.

In einer weiteren Ausführungsform der Erfindung wird beim Betriebszustand Abschalten der Arbeitsdruck unter dem zweiten Druck gewählt. Der Druck ist jedoch von null verschieden, sodass noch eine gewisse geringe Menge an Wasserstoff zur Verfügung gestellt wird. Hierdurch wird die Zufuhr von Wasserstoff nicht sofort auf null reduziert. Beispielsweise wird dieser Arbeitsdruck so lange beibehalten, bis die Brennstoffzelle einen vorgegebenen minimalen Stromwert, beispielsweise null Ampere erreicht hat. Anschließend wird die Brennstoffzelle außer Betrieb genommen. Beispielsweise werden die Gaszuleitungen geschlossen.

In einer weiteren Ausführungsform der Erfindung wird beim Betriebszustand Spülen ein dritter Druck als Arbeitsdruck gewählt, wobei der dritte Druck dem 1,2fach bis 2,5fachen des ersten Drucks entspricht.

In einer weiteren Ausführungsform der Erfindung wird ein Unterseeboot mit einem zweiten Wasserstoffspeicher ausgewählt, wobei der zweite Wasserstoffspeicher ein Hochdruckwasserstoffspeicher ist. Beispielsweise ist der Hochdruckwasserstoffspeicher eine Druckgasflasche mit einem Druck von 10 MPa bis 40 MPA. Es kann sich hierbei um eine handelsübliche Druckgasflasche handeln. Diese benötigt nur ein kleines Volumen, da dieser Wasserstoff vorzugsweise nur eingesetzt wird, um die Erhöhung des Arbeitsdruckes beim Spülen unabhängig vom Füllstand des Wasserstoffspeichers zu gewährleisten.

In einer weiteren Ausführungsform der Erfindung wird der Kathodenarbeitsdruck gleich dem Arbeitsdruck der Anodenseite gewählt, wobei eine Toleranz von maximal ± 20 kPa, bevorzugt von maximal ± 10 kPa, besonders bevorzugt von ± 5 kPa, vorgegeben wird.

Durch die geringe Druckdifferenz wird eine mechanische Belastung der Membran reduziert oder gar ganz vermieden.

In einer bevorzugten Ausführungsform der Erfindung ist der Wasserstoffspeicher ein Metallhydridspeicher. Im Metallhydrid ist der Wasserstoff sicher gebunden. In der Anwendung im Unterseebootbereich ist der Gewichtsnachteil dieser Speichertechnologie aufgrund der Verdrängung durch den Speicher selbst weniger relevant.

In einer weiteren Ausführungsform der Erfindung wird die Brennstoffzelle abgeschaltet, sobald der Speicherdruck nicht mehr ausreicht, um den Druck in der Brennstoffzelle auf wenigstens den zweiten Druck einzustellen.

Erfindungsgemäß sind der Wasserstoffspeicher und die Brennstoffzelle über einem Druckregler verbunden. Das erfindungsgemäße Verfahren dient zum Betreiben eines Unterseebootes, welches Wasserstoff in einem Wasserstoffspeicher mitführt, wo der Druck eine Funktion des Füllstandes ist. Für Unterseeboote mit einem Reformer zur Erzeugung von Wasserstoff sind andere Verfahren bevorzugt. Daher weist ein Unterseeboot zur Durchführung des Verfahrens bevorzugt keinen Reformer auf.

In einem weiteren Aspekt betrifft die Erfindung ein Unterseeboot mit einem Wasserstoffspeicher, einem Druckregler und einer Brennstoffzelle sowie einer Steuervorrichtung zur Durchführung des erfindungsgemäßen Verfahrens.

Nachfolgend ist das erfindungsgemäße Verfahren anhand eines in den Zeichnungen dargestellten Ausführungsbeispiels näher erläutert.
Fig. 1 Schema des Verfahrens
Fig. 2 Schema beim Hochfahren
Fig. 3 Schema beim Spülen

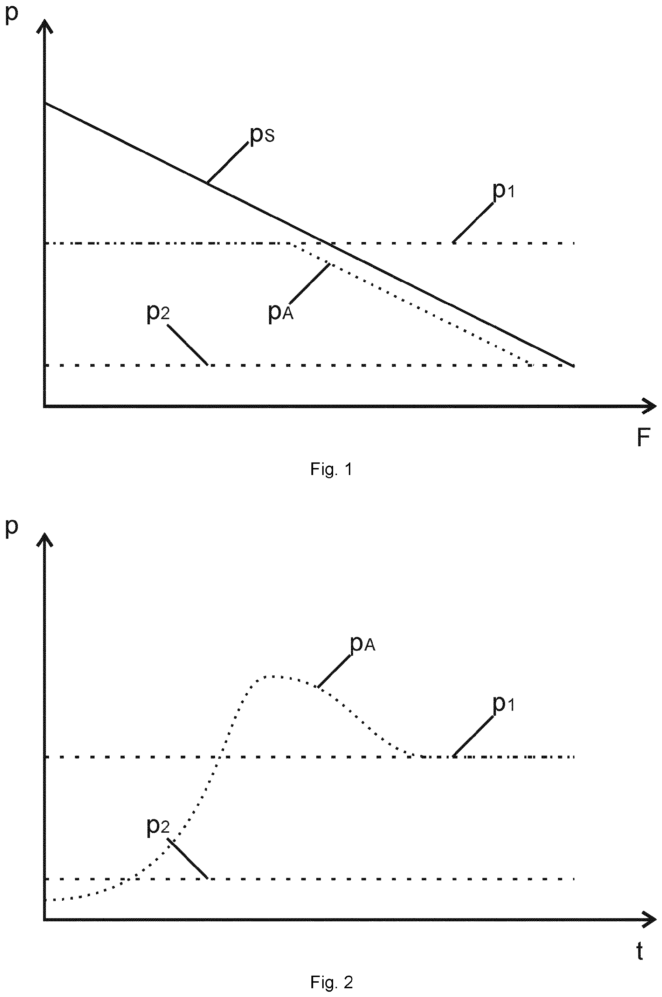

In Fig. 1 ist der Zusammenhang der Drücke schematisch dargestellt. Auf der Abszisse ist eine dem Füllstand F des Wasserstoffspeichers korrelierte Größe aufgetragen. Diese sei beispielhaft so gewählt, dass der Speicherdruck p_{S} linear korreliert sei, wie dargestellt. Der reale Verlauf kann anders sein, würde nur zu einer entsprechenden Veränderung in der grafischen Auftragung führen. Auf der Ordinate ist der Druck angegeben.

Es wird ein erster Druck p₁ vorgegeben, welcher der Idealwert für den Regelbetrieb für die Anodenseite der Brennstoffzelle darstellt. Ferner wird ein zweiter Druck p₂ vorgegeben, welcher einen Minimaldruck für den Betrieb der Anodenseite der Brennstoffzelle darstellt. Diese beiden vorgegebenen Drücke sind zeitunabhängig und weisen auch keine Korrelation beispielsweise zum Füllstand F auf. Daher erscheinen diese als horizontale Linien. Beispielsweise sei p₁ 250 kPa und p₂ 150 kPa.

Ist der Speicherdruck p_{S} deutlich größer als der erste Druck p₁, so kann der Arbeitsdruck p_{A} auf den Idealwert p₁ gewählt und eingestellt werden. Erst wenn sich der Speicherdruck p_{S} dem ersten Druck p₁ annähert, muss der Arbeitsdruck p_{A} angepasst werden. Gehen wir beispielsweise davon aus, dass für eine kontrollierte und stabile Einstellung des Arbeitsdruckes p_{A} eine Druckdifferenz Δp von 20 kPa zum Speicherduck p_{S} notwendig ist, so wird der Arbeitsdruck erniedriget, sobald der Speicherdruck p_{S} im gezeigten Fall unter 270 kPa fällt. Dann wird der Arbeitsdruck um Δp = 20 kPa unter dem Speicherdruck gewählt, bis der Arbeitsdruck die Grenze des zweiten Druckes p₂ von hier 150 kPa erreicht. Ab jetzt reicht der Wasserstoff nicht mehr aus, die Brennstoffzelle wird abgeschaltet. Im diesem Beispiel ist dann der Speicherdruck 170 kPa.

In Fig. 2 sei exemplarisch der Betriebszustand des Hochfahrens gezeigt. Auf der Abszisse ist hier die Zeit t aufgetragen. Der Arbeitsdruck p_{A} wird zunächst auf dem Niveau unterhalb des zweiten Drucks p₂, also beispielsweise in der Größe von 50 kPA gewählt. Da der Wasserstoffspeicher nicht bis zu einem geringeren Druck als p₂ betrieben wird, steht dieser Druck sicher zur Verfügung. Vorausgesetzt der Speicherdruck p_{S} sei ausreichend hoch, so wird der Arbeitsdruck p_{A} schnell gesteigert, auch über den ersten Druck p₁ hinaus, beispielsweise auf einen maximalen Druck von 350 kPa. Hierdurch kann die Brennstoffzelle bei höheren Lasten betrieben werden, und damit ein schnelleres Aufheizen der Brennstoffzelle erreicht werden. Anschließend wird der Arbeitsdruck p_{A} auf den ersten Druck p₁ abgesenkt.

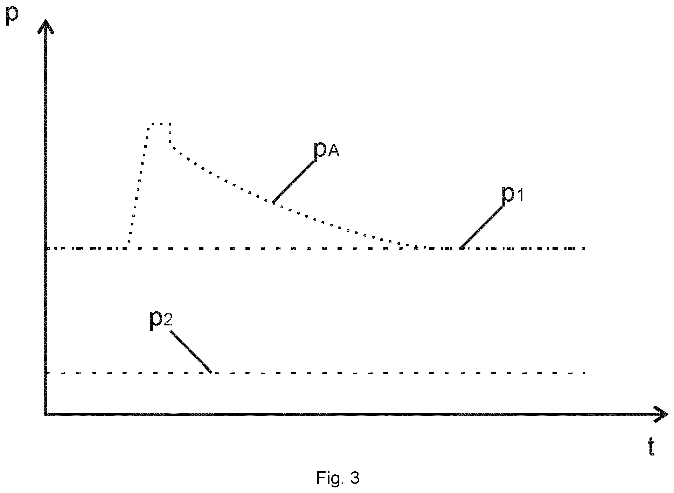

In Fig. 3 sei weiter exemplarisch der Betriebszustand Spülen gezeigt. Der Arbeitsdruck p_{A} wird kurzfristig erhöht, beispielsweise auf 350 kPa. Durch das Öffnen eines Auslassventils, um beispielsweise Inertgas auszuschleusen, sinkt der Druck schlagartig etwas. Im Weiteren sinkt der Druck durch Umsatz von Wasserstoff an der Anode weiter, bis dieser wieder den Idealwert des ersten Druckes, im gezeigten Beispiel 250 kPa erreicht hat.

## Patentansprüche

1. Verfahren zum Betreiben eines Unterseebootes mit einer Brennstoffzelle und einem Wasserstoffspeicher sowie einem Druckregler zwischen dem Wasserstoffspeicher und der Brennstoffzelle, wobei das Verfahren die folgenden Schritte aufweist:
- Vorgeben eines ersten Druckes p₁ für die Anodenseite der Brennstoffzelle, wobei der erste Druck p₁ als Idealwert für den Regelbetrieb ausgelegt ist,
- Vorgeben eines zweiten Druckes p₂ für die Anodenseite der Brennstoffzelle, wobei der zweite Druck p₂ der Minimaldruck ist,
- Erfassen eines Speicherdrucks p_{S}, mit welchem Wasserstoff vom Wasserstoffspeicher an den Druckregler gegeben wird,
- Auswählen eines Arbeitsdrucks p_{A} in Abhängigkeit vom Speicherdruck p_{S}, welcher auf die Anodenseite der Brennstoffzelle gegeben wird und durch den Druckregler eingestellt wird,
wobei der Arbeitsdruck p_{A} in Abhängigkeit vom Speicherdruck p_{S} sowie des ersten Druckes p₁ und des zweiten Druckes p₂ gewählt wird, **dadurch gekennzeichnet, dass** zwischen dem Wasserstoffspeicher und der Brennstoffzelle der Druck nicht erhöht wird, wobei der Wasserstoff aus dem Wasserstoffspeicher entnommen und nicht durch einen Reformer erzeugt wird.

2. Verfahren nach Anspruch 1, **dadurch gekennzeichnet, dass** der Arbeitsdruck p_{A} in der Höhe des ersten Druckes p₁ oder wenn dieses nicht möglich ist so nahe am ersten Druck p₁ gewählt wird, wie dieses aufgrund des Speicherdruckes p_{S} möglich ist.

3. Verfahren nach einem der vorstehenden Ansprüche, **dadurch gekennzeichnet, dass** zwischen dem Speicherdruck p_{S} und dem Arbeitsdruck p_{A} eine Differenz von wenigstens 5 kPa, bevorzugt von wenigstens 10 kPa, besonders bevorzugt von wenigstens 20 kPa gehalten wird.

4. Verfahren nach einem der vorstehenden Ansprüche, **dadurch gekennzeichnet, dass** der erste Druck p₁ zwischen 250 kPa und 400 kPa gewählt wird.

5. Verfahren nach einem der vorstehenden Ansprüche, **dadurch gekennzeichnet, dass** der zweite Druck p₂ zwischen 200 kPa und 50 kPa, bevorzugt zwischen 170 kPa und 120 kPa gewählt wird.

6. Verfahren nach einem der vorstehenden Ansprüche, **dadurch gekennzeichnet, dass** im Verfahrensschritt Auswählen eines Arbeitsdrucks p_{A} als weitere Information ein Betriebszustand berücksichtigt wird, wobei der Betriebszustand ausgewählt ist aus der Liste umfassend Spülen, Hochfahren, Regelbetrieb und Abschalten.

7. Verfahren nach Anspruch 6 **dadurch gekennzeichnet, dass** beim Betriebszustand Hochfahren der Arbeitsdruck p_{A} zunächst unterhalb des zweiten Druckes p₂ gewählt wird und anschließend gesteigert wird, bis der für den Regelbetrieb gewählte Arbeitsdruck p_{A} erreicht ist.

8. Verfahren nach Anspruch 7 **dadurch gekennzeichnet, dass** beim Betriebszustand Hochfahren der Arbeitsdruck p_{A} kurzfristig oberhalb des ersten Druckes p₁ gewählt wird.

9. Verfahren nach einem der Ansprüche 6 bis 8, **dadurch gekennzeichnet, dass** beim Betriebszustand Abschalten der Arbeitsdruck p_{A} unter dem zweiten Druck p₂ gewählt wird.

10. Verfahren nach einem der Ansprüche 6 bis 9, **dadurch gekennzeichnet, dass** beim Betriebszustand Spülen ein dritter Druck als Arbeitsdruck p_{A} gewählt wird, wobei der dritte Druck dem 1,2fach bis 2,5fachen des ersten Drucks p₁ entspricht.

11. Verfahren nach Anspruch 10, **dadurch gekennzeichnet, dass** ein Unterseeboot mit einem zweiten Wasserstoffspeicher ausgewählt wird, wobei der zweite Wasserstoffspeicher ein Hochdruckwasserstoffspeicher ist.

12. Verfahren nach einem der vorstehenden Ansprüche, **dadurch gekennzeichnet, dass** der Kathodenarbeitsdruck gleich dem Arbeitsdruck p_{A} der Anodenseite gewählt wird, wobei eine Toleranz von maximal ± 20 kPa, bevorzugt von maximal ± 10 kPa, besonders bevorzugt von ± 5 kPa, vorgegeben wird.

13. Unterseeboot mit einem Wasserstoffspeicher, einem Druckregler und einer Brennstoffzelle sowie einer Steuervorrichtung zur Durchführung des Verfahrens nach einem der vorstehenden Ansprüche.

## Claims

1. A method of operating a submarine having a fuel cell and a hydrogen storage tank and a pressure regulator between the hydrogen storage tank and the fuel cell, the method comprising the following steps:
- Specification of a first pressure p₁ for the anode side of the fuel cell, whereby the first pressure p₁ is designed as the ideal value for control operation,
- Specification of a second pressure p₂ for the anode side of the fuel cell, whereby the second pressure p₂ is the minimum pressure,
- Detection of a storage pressure p_{S} at which hydrogen is supplied from the hydrogen storage tank to the pressure regulator,
- Selection of a working pressure p_{A} depending on the storage pressure p_{S}, which is applied to the anode side of the fuel cell and is set by the pressure regulator,
wherein the working pressure p_{A} is selected as a function of the storage pressure p_{S} and the first pressure p₁and the second pressure p₂, **characterised in that** the pressure is not increased between the hydrogen storage tank and the fuel cell, wherein the hydrogen is taken from the hydrogen storage tank and is not produced by a reformer.

2. Method according to claim 1, **characterised in that** the working pressure p_{A} is selected at the level of the first pressure p₁ or, if this is not possible, as close to the first pressure p₁ as is possible on the basis of the storage pressure p_{S}.

3. Method according to one of the preceding claims, **characterised in that** a difference of at least 5 kPa, preferably of at least 10 kPa, particularly preferably of at least 20 kPa, is maintained between the storage pressure p_{S} and the working pressure P_{A}.

4. Method according to one of the preceding claims, **characterised in that** the first pressure p₁ is selected between 250 kPa and 400 kPa.

5. Method according to one of the preceding claims, **characterised in that** the second pressure p₂ is selected between 200 kPa and 50 kPa, preferably between 170 kPa and 120 kPa.

6. Method according to one of the preceding claims, **characterised in that** in the method step of selecting a working pressure p_{A}, an operating state is taken into account as further information, the operating state being selected from the list comprising flushing, start-up, normal operation and shutdown.

7. Method according to claim 6, **characterised in that** in the start-up operating state, the working pressure p_{A} is initially selected below the second pressure p₂ and is then increased until the working pressure p_{A} selected for normal operation is reached.

8. Method according to claim 7, **characterised in that** the operating pressure p_{A} is briefly selected above the first pressure p₁ during the start-up operating state .

9. Method according to one of claims 6 to 8, **characterised in that** the working pressure p_{A} is selected below the second pressure p₂ in the shutdown operating state.

10. Method according to one of claims 6 to 9, **characterised in that** a third pressure is selected as the working pressure p_{A} in the flushing operating state, the third pressure corresponding to 1.2 times to 2.5 times the first pressure p₍₁₎.

11. Method according to claim 10, **characterised in that** a submarine with a second hydrogen storage system is selected, wherein the second hydrogen storage system is a high-pressure hydrogen storage system.

12. Method according to one of the preceding claims, **characterised in that** the cathode working pressure is selected to be equal to the working pressure p_{A} of the anode side , wherein a tolerance of at most ± 20 kPa, preferably of at most ± 10 kPa, particularly preferably of ± 5 kPa, is specified.

13. Submarine with a hydrogen storage tank, a pressure regulator and a fuel cell as well as a control device for carrying out the method according to one of the preceding claims.

## Revendications

1. Méthode d'exploitation d'un sous-marin doté d'une pile à combustible, d'un réservoir de stockage d'hydrogène et d'un régulateur de pression entre le réservoir de stockage d'hydrogène et la pile à combustible, la méthode comprenant les étapes suivantes :
- Spécification d'une première pression p₁ pour le côté anode de la pile à combustible, la première pression p₁ étant conçue comme la valeur idéale pour le fonctionnement du régulateur,
- Spécification d'une deuxième pression p₂ pour le côté anode de la pile à combustible, la deuxième pression p₂ étant la pression minimale,
- Détection d'une pression de stockage p_{S} à laquelle l'hydrogène est fourni par le réservoir de stockage d'hydrogène au régulateur de pression,
- Sélection d'une pression de travail p_{A} en fonction de la pression de stockage p_{S}, qui est appliquée au côté anode de la pile à combustible et est fixée par le régulateur de pression,
la pression de travail p_{A} est sélectionnée en fonction de la pression de stockage p_{S}, de la première pression p₁ et de la seconde pression p₂, **caractérisée par le fait que** la pression n'augmente pas entre le réservoir de stockage d'hydrogène et la pile à combustible, l'hydrogène étant prélevé dans le réservoir de stockage d'hydrogène et n'étant pas produit par un reformeur.

2. Méthode selon la revendication 1, **caractérisée par le fait que** la pression de travail p_{A} est sélectionnée au niveau de la première pression p₁ ou, si cela n'est pas possible, aussi près de la première pression p₁ que possible sur la base de la pression de stockage p_{S}.

3. Procédé selon l'une des revendications précédentes, **caractérisé en ce qu'**une différence d'au moins 5 kPa, de préférence d'au moins 10 kPa, de préférence encore d'au moins 20 kPa, est maintenue entre la pression de stockage p_{S} et la pression de travail P_{A}.

4. Procédé selon l'une des revendications précédentes, **caractérisé en ce que** la première pression p₁ est choisie entre 250 kPa et 400 kPa.

5. Procédé selon l'une des revendications précédentes, **caractérisé en ce que** la seconde pression p₂ est choisie entre 200 kPa et 50 kPa, de préférence entre 170 kPa et 120 kPa.

6. Procédé selon l'une des revendications précédentes, **caractérisé en ce que** dans l'étape du procédé de sélection d'une pression de travail p_{A}, un état de fonctionnement est pris en compte comme information supplémentaire, l'état de fonctionnement étant choisi dans la liste comprenant le rinçage, le démarrage, le fonctionnement normal et l'arrêt.

7. Procédé selon la revendication 6, **caractérisé en ce que** dans l'état de fonctionnement de démarrage, la pression de travail p_{A} est initialement sélectionnée en dessous de la seconde pression p₂ et est ensuite augmentée jusqu'à ce que la pression de travail p_{A} sélectionnée pour le fonctionnement normal soit atteinte.

8. Procédé selon la revendication 7, **caractérisé en ce que** la pression de travail p_{A} est brièvement sélectionnée au-dessus de la première pression p₁ pendant l'état de fonctionnement de démarrage .

9. Procédé selon l'une des revendications 6 à 8, **caractérisé par le fait que** la pression de travail p_{A} est sélectionnée en dessous de la deuxième pression p₂ dans l'état de fonctionnement d'arrêt.

10. Procédé selon l'une des revendications 6 à 9, **caractérisé en ce qu'**une troisième pression est choisie comme pression de travail p_{A} dans l'état de fonctionnement de rinçage, la troisième pression correspondant à 1,2 fois à 2,5 fois la première pression p_{((1)).}

11. Méthode selon la revendication 10, **caractérisée par le fait que l**'on sélectionne un sous-marin avec un second système de stockage d'hydrogène, le second système de stockage d'hydrogène étant un système de stockage d'hydrogène à haute pression.

12. Méthode selon l'une des revendications précédentes, **caractérisée par le fait que** la pression de travail de la cathode est sélectionnée pour être égale à la pression de travail p_{A} du côté anode, une tolérance d'au plus ± 20 kPa, de préférence d'au plus ± 10 kPa, de préférence encore de ± 5 kPa, étant spécifiée.

13. Sous-marin comportant un réservoir de stockage d'hydrogène, un régulateur de pression et une pile à combustible ainsi qu'un dispositif de contrôle pour la mise en oeuvre du procédé selon l'une des revendications précédentes.
